# EUROPÄISCHE PATENTANMELDUNG

(11) **EP 3 043 142 A1**
(43) Veröffentlichungstag der Anmeldung: **13.07.2016**
(21) Anmeldenummer: 16000008.9
(22) Anmeldetag: 05.01.2016
(51) Int. Cl.: G01B 3/06, G01B 3/08

(54) **KLAPPBARER ZOLLSTOCK**

(30) Priorität: 08.01.2015 DE 102015000139
(71) Anmelder: Shovkoplyas Oleg, 86153 Augsburg (DE)
(72) Erfinder: Shovkoplyas Oleg, 86153 Augsburg (DE)

(57) **Zusammenfassung**

Die Erfindung bezieht sich auf einen klappbaren Zollstock und gehört zu den Messgeräten.

Hauptanspruch: Klappbarer Zollstock, der einschließt:
- einige übereinander eingerichtete Latten, die mit der Möglichkeit einer Verschiebung einer bezüglich der andere parallel der Achsen der Latten auf eine bestimmte Größe, die die Länge jeder Latte nicht übertritt,
- eine Einrichtung, die das Schieben jeder Latte außer der untersten relativ der über diese Latte eingerichtete Latte verhindert, bis die unter diese Latte eingerichtete Latte relativ zu dieser Latte auf eine vorgegebene Größe verschoben wird,
dadurch gekennzeichnet, dass
die genannte Einrichtung zur Verhinderung eines Schiebens als eine flache Feder, die aus zwei unter einem Winkel zueinander gelegener Teile besteht, ausgeführt ist, wobei:
- einer der Teile der flachen Feder ist unter der Latte so befestigt dass die Biegungsstelle dabei an den Ort eingerichtet ist, wo sich das Ende der niedriger eingerichteten Latte bei ihrer Verschiebung auf die ganze oben genannte Größe befindet,
- am Ende des zweiten Teils der Feder eine Zinke ausgeführt ist, deren Höhe die Dicke jeder Latte übertritt,
- in der Latte ist eine durchgehende Öffnung ausgeführt, die dieser Zinke entspricht, und in der höher eingerichteten Latte, außer der am höchsten eingerichteten Latte, eine Öffnung ausgeführt ist, die der Zinke der niedriger eingerichteten Latte entspricht,
- das Ende der Zinke bei der freien Position der Feder aus der Öffnung der Latte, an der die Feder befestigt ist, nach oben nicht hinausragt.

## Beschreibung

Die Erfindung bezieht sich auf einen klappbaren Zollstock und gehört zu den Messgeräten.

Es ist ein klappbarer Zollstock, der einige übereinander eingerichtete Latten, die mit der Möglichkeit einer Verschiebung einer bezüglich der andere parallel der Achsen der Latten auf eine bestimmte Größe, die die Länge jeder Latte nicht übertritt, und eine Einrichtung, die das Schieben jeder Latte außer der untersten relativ der über diese Latte eingerichtete Latte verhindert, bis die unter diese Latte eingerichtete Latte relativ zu dieser Latte auf eine vorgegebene Größe verschoben wird, einschließt, bekannt (siehe DE 10 2007 026 758). Der Mangel des bekannten Zollstocks besteht darin, dass die Einrichtung, die das Schieben der Latten verhindert, das Vorhandensein eines Gehäuses, in dem die Latten eingerichtet sind, fordert. Das macht der Zollstock sperrig und nicht handlich in der Benutzung.

Die Aufgabe der vorliegenden Erfindung ist die Beseitigung des angegebenen Mangels. Sie wurde mittels der Merkmale der Ansprüche gelöst.

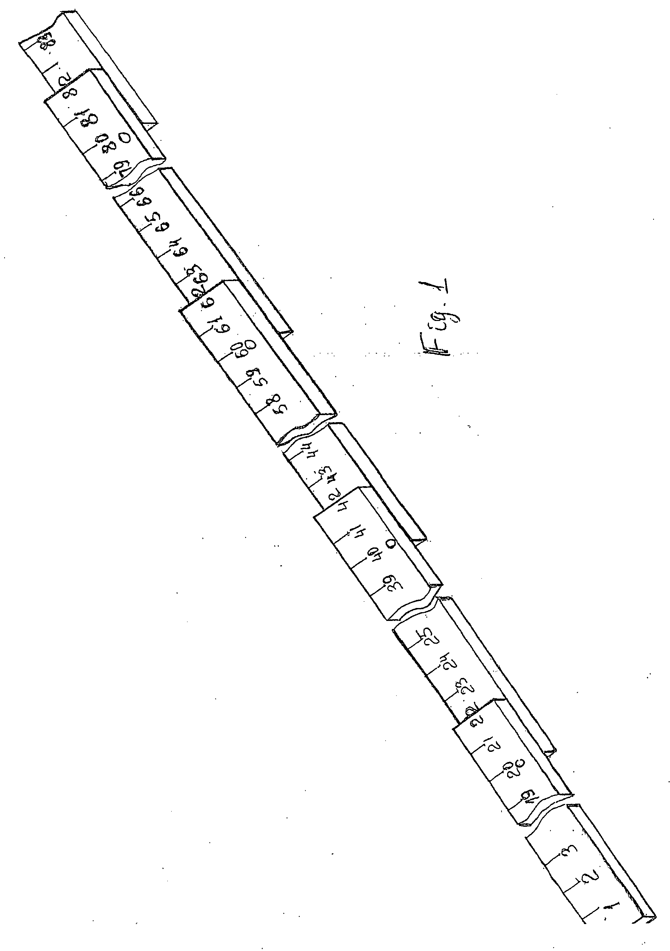

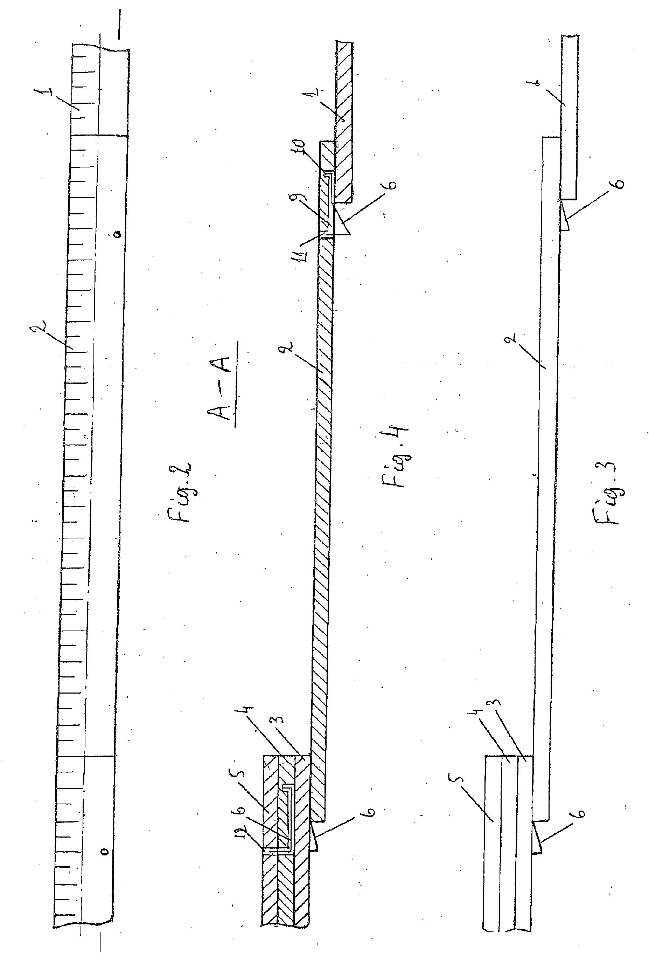

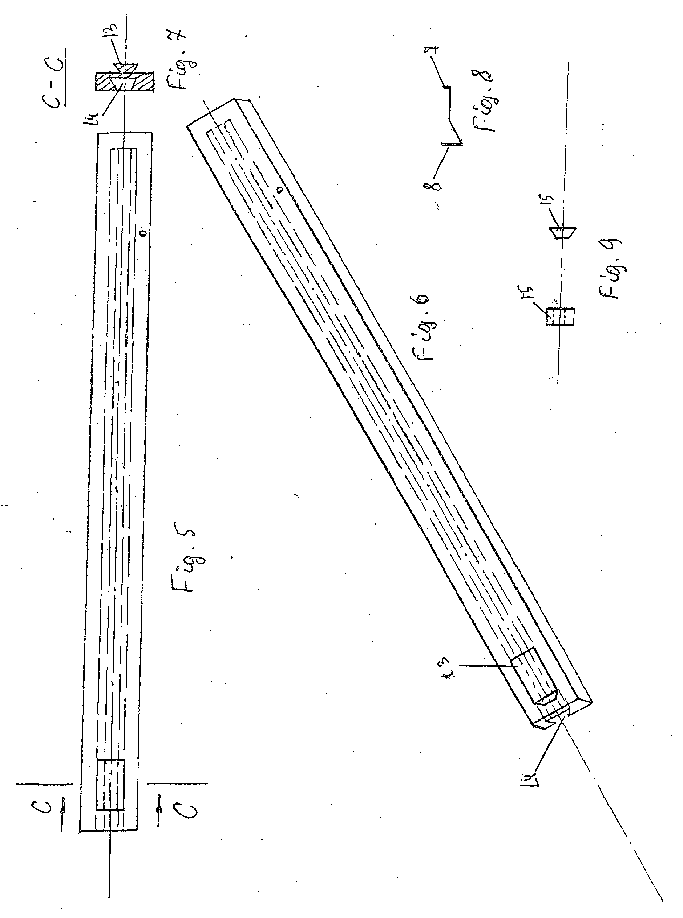

Auf der Fig.1 ist der vorgeschlagene Zollstock in der auseinander gerückten Position, auf der Fig.2 ist ein Teil des vorgeschlagenen Zollstocks, Draufsicht, auf der Fig.3 ist dasselbe, Seitenansicht, auf der Fig.4 ist der Schnitt A-A der Figur 2, auf der Fig.5 ist eine Latte, Draufsicht, auf der Fig.6 ist dasselbe, Isometrie, auf der Fig.7 ist der Schnitt C-C der Figur 5, auf der Fig.8 ist die flache Feder, Seitenansicht, auf der Fig.9 ist der Stöpsel, Draufsicht und Seitensicht dargestellt.

Der vorgeschlagene klappbare Zollstock besteht aus einigen sich übereinander eingerichteten Latten. Über eine Latte 1 (Fig.2) ist eine Latte 2, über die Latte 2 ist eine Latte 3, über die Latte 3 ist eine Latte 4, über die Latte 4 ist eine Latte 5 eingerichtet. Zwischen den Latten 1 und 2, 2 und 3, 3 und 4 sind flache Federn 6 gelegt. Jede flache Feder 6 (Fig.8) hat ein gebogener Endteil 7 und eine Zinke 8. Jede Latte (außer der untersten) hat eine Aussparung 9, in welche die Feder 6 hineinkommt. Auf einem Ende der Aussparung 9 befindet sich eine nicht durchdringende Bohrung 10, die für den Endteil 7 der Feder 6 bestimmt ist, auf anderem Ende der Aussparung 9 befindet sich eine durchgehende Öffnung 11, in der die Zinke 8 der Feder 6 sich bewegen kann. Der Winkel der Neigung der Teile der Feder 6 zueinander und die Höhe der Zinke 8 sind so ausgewählt, dass die Zinke 8 in der freien Position der Feder 6 in die Öffnung 11 jener Latte eingeht, unter der diese Feder eingerichtet ist, aber aus dieser Öffnung nicht herausragt (so befindet sich die Feder 6 zwischen den Latten 1 und 2 auf der Fig.4). Falls die Feder 6 zusammengepresst ist (so befindet sich die Feder 6 zwischen den Latten 3 und 4 auf der Fig.4), so ragt sich die Zinke 8 heraus und kommt in eine entsprechende Öffnung 12 der höher eingerichteten Latte.

Die Federn 6 der angrenzenden Latten sind nicht auf einer Linie eingerichtet, sondern sind relativ zueinander der Richtung senkrecht der Achsen der Latten verschoben. Auf der Fig. 4 ist es sichtbar, dass sich die Federn der Latten 2 und 4 auf der allgemeinen Linie des Schnittes A-A befinden, während die Feder der Latte 3 sich außer dieser Linie befindet.

Damit sich die Latten relativ zueinander nur in der axialen Richtung verschoben werden konnten, ist jede Latte mit einem Vorsprung 13 und einer Aussparung 14 ausgestattet, die zusammen eine Schwalbenschwanzverbindung bilden (Figuren 5 bis 7). Die Aussparung 14 ist von einer Seite geschlossen ausgeführt, von anderer Seite kann sie mittels eines Stoppers 15, der auf der Fig.8 dargestellt ist, geschlossen werden.

Der vorgeschlagene klappbare Zollstock arbeitet folgendermaßen: Solange sich die Latten übereinander im zusammengelegten Zustand des Zollstocks befinden, kann sich nur die unterste Latte 1 bewegen. Eine Bewegung der übrigen Latten wird durch den Zinken der Federn der niedriger eingerichteten Latten gesperrt: diese Federn befinden sich in zusammengepresster Position, wie die Feder zwischen den Latten 3 und 4 auf der Fig.4. Wenn die erste Latte vollständig nach vorne verschoben wird, wird sie die Feder 6 der über sie eingerichteter Latte 2 befreien. Die Zinke der Feder 6 aufhört jetzt, die Bewegung der Latte 2 zu sperren, man kann sie schieben. Ebenso geschieht es mit allen nachfolgenden Latten.

Die vorgeschlagene Erfindung ist in Herstellung einfach.

## Patentansprüche

1. Klappbarer Zollstock, der einschließt:
- einige übereinander eingerichtete Latten, die mit der Möglichkeit einer Verschiebung einer bezüglich der andere parallel der Achsen der Latten auf eine bestimmte Größe, die die Länge jeder Latte nicht übertritt,
- eine Einrichtung, die das Schieben jeder Latte außer der untersten relativ der über diese Latte eingerichtete Latte verhindert, bis die unter diese Latte eingerichtete Latte relativ zu dieser Latte auf eine vorgegebene Größe verschoben wird,
**dadurch gekennzeichnet, dass** die genannte Einrichtung zur Verhinderung eines Schiebens als eine flache Feder, die aus zwei unter einem Winkel zueinander gelegener Teile besteht, ausgeführt ist, wobei:
- einer der Teile der flachen Feder ist unter der Latte so befestigt dass die Biegungsstelle dabei an den Ort eingerichtet ist, wo sich das Ende der niedriger eingerichteten Latte bei ihrer Verschiebung auf die ganze oben genannte Größe befindet,
- am Ende des zweiten Teils der Feder eine Zinke ausgeführt ist, deren Höhe die Dicke jeder Latte übertritt,
- in der Latte ist eine durchgehende Öffnung ausgeführt, die dieser Zinke entspricht, und in der höher eingerichteten Latte, außer der am höchsten eingerichteten Latte, eine Öffnung ausgeführt ist, die der Zinke der niedriger eingerichteten Latte entspricht,
- das Ende der Zinke bei der freien Position der Feder aus der Öffnung der Latte, an der die Feder befestigt ist, nach oben nicht hinausragt.

2. Klappbarer Zollstock nach Anspruch 1, **dadurch gekennzeichnet, dass** die Zinken der übereinander eingerichteten Latten bezüglich einander nach der Breite der Latten verschoben sind.
